# FASCICULE DE BREVET EUROPEEN

(11) **EP 1 163 094 B1**
(45) Date de publication et mention de la délivrance du brevet: **11.02.2004**
(21) Numéro de dépôt: 00911016.4
(22) Date de dépôt: 21.03.2000
(51) Int. Cl.: B29C 45/14, B29C 45/17, B29C 70/78, B29D 31/00

(54) **ARTICLES MIXTES COMPRENANT UNE PARTIE RIGIDE ET UNE PARTIE A BASE D'UN MATERIAU THERMOPLASTIQUE, ET PROCEDE DE FABRICATION**
VERBUNDGEGENSTÄNDE MIT EINEM STARREN TEIL UND EINEM TEIL AUS THERMOPLASTISCHEM MATERIAL, UND HERSTELLUNGSVERFAHREN
MIXED ARTICLES COMPRISING A RIGID PART AND A PART BASED ON A THERMOPLASTIC MATERIAL, AND MANUFACTURING METHOD

(30) Priorité: 23.03.1999 FR 9903766; 30.12.1999 FR 9916711
(43) Date de publication de la demande: 19.12.2001
(73) Titulaire: Rhodia Engineering Plastics SA, 69192 Saint-Fons-Cedex (FR)
(72) Inventeur: CHOMIER, Didier, F-42800 St-Romain en Jarez (FR); OP DE LAAK, Marcel, D-79110 Freiburg (DE); POTSCH, Gerhard, D-79108 Freiburg (DE)
(74) Mandataire: Esson, Jean-Pierre
(86) Numéro de dépôt international: PCT/FR2000/000703
(87) Numéro de publication internationale: WO 2000/056517

(56) Documents cités:
- EP-A- 0 320 925
- EP-A- 0 322 285
- EP-A- 0 370 342
- DE-A- 2 716 676
- DE-A- 3 429 883
- FR-A- 2 191 577
- US-A- 3 242 239
- US-A- 4 968 474
- US-A- 5 456 957
- PATENT ABSTRACTS OF JAPAN vol. 1996, no. 03, 29 mars 1996 (1996-03-29) & JP 07 299841 A (ASAHI CHEM IND CO LTD), 14 novembre 1995 (1995-11-14)
- PATENT ABSTRACTS OF JAPAN vol. 15, no. 267 (M-1133), 8 juillet 1991 (1991-07-08) -& JP 03 090330 A (MITSUI PETROCHEM IND LTD), 16 avril 1991 (1991-04-16)

## Description

La présente invention concerne la réalisation d'articles comportant au moins un élément rigide et au moins un élément constitué de matière thermoplastique obtenu par moulage.

Dans les domaines industriels concernant la fabrication d'objets manufacturés, par exemple dans les domaines du bâtiment, de l'ameublement, de l'automobile et des biens de consommation, les articles réalisés doivent de manière générale être légers et présenter les propriétés nécessaires à l'usage, notamment des propriétés mécaniques suffisamment élevées. Pour répondre à ces spécifications, le choix des matériaux et la forme conférée à ceux-ci sont déterminants.

Les dernières décennies ont vu se développer l'utilisation des matières plastiques, par exemple dans les domaines de l'automobile ou de la construction, qui sont plus légères et qui peuvent être plus facilement travaillées que les métaux. Il est ainsi possible de fabriquer des articles légers présentant des formes complexes, par exemple par injection dans un moule d'un polymère fondu.

Toutefois l'utilisation de matières plastiques peut être limitée dans certains domaines. La réalisation de grandes pièces peut par exemple poser des problèmes de stabilité dimensionnelle, en particulier dans les applications où elles sont soumises à des variations de température ou à des vibrations. C'est le cas notamment dans le domaine de l'automobile pour certaines pièces situées sous le capot. D'autre part, les pièces réalisées en matière plastique peuvent présenter des propriétés mécaniques insuffisantes pour l'application considérée.

Afin de surmonter ce type de difficultés il est connu d'associer différents matériaux, par exemple des éléments métalliques et des éléments constitués de matière thermoplastique. Il existe de très nombreuses publications concernant des structures pouvant être adoptées pour adapter des pièces comportant des matières plastiques et des éléments additionnels adaptés à l'usage auquel elles sont destinées. A titre d'exemple on peut citer la demande de brevet publiée DE4334049 qui enseigne d'insérer des pièces métalliques dans des plaques de matière plastique, la demande de brevet publiée DE4330273 qui enseigne de renforcer des cadres de fenêtres en plastique avec des tiges profilées métalliques. La demande de brevet publiée EP370342 enseigne de renforcer une structure métallique de profil en forme de U avec des nervures en matière thermoplastique injectée à l'intérieur de la structure métallique.

La présente invention a pour objectif de proposer de nouveaux articles dans lesquels sont associés au moins un élément constitué de matière thermoplastique et un élément rigide, par exemple métallique, les articles selon cette structure présentant notamment une bonne stabilité dimensionnelle et une intégrité au choc.

A cet effet l'invention propose un article comportant une partie constituée d'un élément rigide de forme allongée dont au moins une partie présente une section transversale ayant un profil définissant un espace concave, et comportant au moins une partie en matière thermoplastique associée à l'élément rigide et positionnée dans l'espace concave, caractérisé en ce que la partie en matière thermoplastique est en contact sur au moins deux lignes continues dans la direction longitudianle, et en ce que la partie en matière thermoplastique présente une section transversale comportant au moins un creux.

La partie en matière thermoplastique peut être utilisé comme renfort d'un élément rigide léger, par exemple pour la réalisation d'éléments de construction. Ces éléments de construction sont généralement de forme allongée droite ou courbe, en forme de coque ou tubulaires, constitués d'un ou plusieurs segments. Comme exemples de tels articles on peut citer les poutres ou les longerons. Les domaines d'application préférés pour ce type d'articles sont le bâtiment, l'ameublement, la construction automobile, pour la réalisation de pièces structurelles destinées à supporter d'autres pièces. Les articles renforcés de la sorte présentent l'avantage d'être légers tout en conservant des propriétés mécaniques suffisantes par exemple pour supporter d'autres structures. En particulier, l'élément rigide permet une répartition des efforts sur la totalité de l'article et la partie en matière thermoplastique permet de renforcer l'article.

La partie de l'article en matière thermoplastique peut présenter de nombreuses fonctionnalités, l'élément rigide servant de renfort ou de stabilisateur de la forme en matière thermoplastique. La partie en matière thermoplastique peut présenter une structure très complexe, avec par exemple des espaces pour loger d'autres pièces, des nervures de renfort, des moyen d'assemblage avec d'autres pièces ou systèmes, par exemple des clips. L'élément rigide peut être totalement intégré dans la structure définie par la partie en matière thermoplastique, être apparent ou complètement inséré dans la matière thermoplastique. Il peut être utilisé comme simple élément structurel de renfort ou présenter des fonctionnalités propres. Il peut par exemple présenter des moyens d'assemblage à d'autres pièces. De telles structures présentent une stabilité dimensionnelle supérieure à celle de structures réalisées uniquement à partir de matières thermoplastiques. Les variations de dimension des parties en matière plastiques sont en effet limitées par celles de l'élément rigide avec lequel elles sont en contact. Il est ainsi possible de réaliser de grandes pièces à base de matière thermoplastique. Un autre avantage de telles structures est l'amélioration de l'intégrité au choc, c'est à dire la capacité d'un objet à ne pas être fractionné en plusieurs parties après un choc. Les articles selon ce mode de réalisation sont donc notamment adaptés à la réalisation de pièces pour l'automobile, par exemple pour la réalisation de faces avant.

Les articles selon l'invention peuvent être utilisés tels quels en tant que biens de consommation ou être associés à d'autres pièce, éléments ou systèmes, par exemple par collage soudure, rivetage, encastrement ou clipsage.

L'article selon l'invention peut comporter une ou plusieurs parties en matière thermoplastique et dont la section transversale comporte au moins un creux. Dans le cas où il en comporte plusieurs, les parties en matière thermoplastique peuvent être matériellement séparées ou faire partie d'un seul élément matériel en matière thermoplastique. Ainsi deux parties en matières thermoplastique de section creuse positionnées dans l'espace concave peuvent par exemple être liées entre elles par une base en matière thermoplastique. Les moyens de liaisons peuvent est compris à l'intérieur ou à l'extérieur de l'espace concave de l'élément rigide. Les éléments en matière thermoplastique sont généralement mis en forme par moulage.

L'élément rigide présente une forme allongée, droite ou courbe. Il peut également comporter plusieurs tronçons sensiblement allongés et séparés par exemple par des coudes ou des changements de courbures. On peut définir pour ces formes une section transversale perpendiculaire à la direction longitudinale. L'élément rigide et la partie en matière thermoplastique sont en contact sur au moins deux lignes continues dans la direction longitudinale. Les lignes de contacts peuvent être droites, ou courbes, parallèles à la direction longitudinale, ou obliques par rapport à cette direction. Par contact sur au moins deux lignes, on entend que pour toute section transversale, l'étément rigide et la partie en matière thermoplastique sont en contact en au moins deux points du profil définissant l'espace concave. L'élément rigide et la partie en matière thermoplastique sont de préférence en contact sur des surfaces continues.

La partie en matière thermoplastique et l'élément rigide sont avantageusement en contact sur la totalité du profil ou sur des portions du profil, de préférence sur aux moins deux portions. La partie en matière thermoplastique peut par exemple prendre appui l'élément rigide en des bandes de contact continues.

La partie en matière thermoplastique positionnée dans l'espace concave de l'élément rigide est creuse, c'est-à-dire qu'elle présente, sur au moins une partie, une section transversale présentant un espace qui est totalement entouré de matière thermoplastique.

Selon un premier mode de réalisation de l'invention, l'article comporte une partie en matière thermoplastique présentant un profil conjugué à l'espace concave défini par le profil de rélément rigide. Selon ce mode de réalisation, la partie en matière thermoplastique comble l'espace concave totalement ou en grande partie, la partie en matière thermoplastique et l'élément rigide étant en contact sur la totalité ou sur une grande partie de la section.

Pour ce premier mode de réalisation, les éléments rigides comportent par exemple une partie en forme de U, de V, de demi-cercles, présentant éventuellement des méplats. Les éléments rigides peuvent également présenter une section transversale fermée. Par section transversale fermée, il faut entendre toute forme géométrique pour laquelle il est possible de définir un périmètre, comme par exemple un cercle, un rectangle à angles droits ou arrondis, une ellipse, un ovale, ...L'élément rigide peut par exemple être tubulaire. L'espace concave est alors défini par l'espace situé à l'intérieur du périmètre.

Selon un deuxième mode de réalisation de l'invention, l'article comprend au moins deux parties en matière thermoplastique creuses et le profil de l'élément rigide est défini par au moins une base et deux parois opposées définissant des angles dans lesquels chacune des parties est positionnée. Chaque partie en matière thermoplastique est en appui sur la base et une des parois, la paroi relative à l'angle dans lequel est positionnée la partie en matière thermoplastique. Pour ce mode de réalisation l'élément rigide comporte avantageusement sur au moins une partie une section avec un profil en forme de U ou de I. Les deux parties ont par exemple une forme tubulaire.

L'article peut avantageusement comprendre des nervures de renfort en matière thermoplastique, s'appuyant au moins en partie sur les parties en matière thermoplastique positionnées dans les angles. Par exemple les nervures sont de préférence en forme de zigzags ou de X, ou sont constituées de panneaux parallèles reliant les parties positionnées dans les angles. Elles sont de préférence réalisées lors de l'étape de mise en forme de la matière thermoplastique, les parties creuses et les nervures ne formant qu'un seul élément.

Les articles selon l'invention peuvent être réalisés par assemblage de l'élément rigide et d'un ou plusieurs élément en matière thermoplastique préalablement mis en forme. Les éléments peuvent par exemple être solidarisés par emboutissage, soudure, collage, rivetage ou clipsage.

Les articles peuvent être avantageusement réalisés par moulage des parties en matière thermoplastique à l'intérieur de l'espace concave. La matière thermoplastique peut comprendre des parties s'étendant au delà de l'espace concave, en plus des parties creuses. Les techniques de moulage sont bien connues de l'homme du métier. Pour réaliser la mise en forme à l'intérieur de l'espace concave, l'élément rigide est par exemple placé dans un moule de forme adaptée puis de la matière thermoplastique liquide est injectée.

Les articles selon l'invention peuvent par exemple être fabriqués en utilisant un procédé d'injection-fluide. Par injection-fluide, on entend tout procédé comportant une étape où un fluide, par exemple un gaz ou de l'eau, est injecté dans une masse de polymère fondu pour y créer une cavité. Tous les modes de réalisation pouvant entrer sous cette dénomination peuvent être utilisés dans le cadre de l'invention.

Parmi ces procédés, la technique de l'injection-gaz, en fort développement, peut être utilisée. Brièvement, cette technique consiste, dans un premier mode de réalisation, à injecter dans un moule de forme correspondante à celle de la pièce à mouler, une certaine quantité de matière insuffisante pour remplir entièrement le moule. Puis, à introduire dans la masse ainsi injectée, en un ou plusieurs points, une aiguille pour permettre l'alimentation d'un gaz sous pression. Le gaz va générer une cavité dans la masse fondue injectée en forçant le polymère à épouser les parois du moule. Après refroidissement, la pièce est démoulée. Dans un second mode de réalisation, le moule est rempli totalement avec la composition thermoplastique, du gaz sous pression est injecté dans la dite masse pour refouler une partie de la matière hors du moule et ainsi former une cavité tout en maintenant une partie de la matière contre les parois du moule jusqu'à prise en masse ou solidification de celle-ci.

Ces techniques sont notamment utilisées pour réaliser des pièces à paroi épaisse ou pour diminuer la quantité de matière des pièces massiques.

A titre d'exemple de description de procédé d'injection-gaz, on peut citer l'article intitulé "Gas Injection Molding : Current Practices" de S. SHAH publié dans la revue "ANTEC - 91 - pages 1494 à 1506.

L'application de cette technique et des exemples de pièces réalisées à partir de celle-ci sont donnés dans l'article intitulé "Gas Injection Molding : Structural application" de S. SHAH et D. HLAVATY publié dans la même revue que ci-dessus aux pages 1479 -1493.

Une description des procédés d'injection gaz connus sous la marque CINPRES est également donnée dans l'article "IM Alternatives Produce Performance Advantages" de John Theverge publié dans la revue "Plastics Engineering" de février 1991 (pages 27 - 31).

On peut également citer l'article "Neue Möglichkeiten beim Spritzgiessen durch das Gasinnendruckverfahren" de B. KLOTZ et E. BÜRKLE publié dans Kunstoffe 79 (1989) n° 11 - pages 1102 - 1107.

Les articles selon l'invention peuvent par exemple être réalisés selon un procédé comportant les étapes suivantes :
a) Disposition dans un moule d'injection de forme choisie d'un élément rigide préformé dont une section transversale comporte au moins une partie définissant un espace concave,
b) Injection de matière thermoplastique fondue dans le moule
c) injection d'un fluide, de préférence un gaz, par une aiguille dans la matière thermoplastique fondue présente dans l'espace concave de l'élément rigide.

Un autre procédé convenable pour l'invention consiste à mettre en forme l'élément rigide dans l'outil de moulage de l'élément constitué à partir de matière thermoplastique, un tel procédé comportant par exemple les étapes suivantes :
a) Disposition dans un moule d'injection de forme choisie d'un élément rigide à préformer.
b) Mise en préforme de l'élément rigide par emboutissage par ou thermodéformation dans le moule, la préforme présentant une section transversale comporte au moins une partie définissant un espace concave,
c) injection de matière thermoplastique fondue dans le moule
d) injection d'un fluide, de préférence un gaz, par une aiguille dans la matière thermoplastique fondue présente dans l'espace concave de l'élément rigide.

Selon un autre mode de réalisation de l'invention, les articles selon l'invention sont fabriqués par un procédé d'extrusion-soufflage.

L'élément rigide et l'élément constitué de matière thermoplastique, peuvent être solidarisés par tout moyen connu, par exemple collage, rivetage, surmoulage. Un moyen de solidarisation particulièrement avantageux est le débordement de matière injectée à travers des perforations réalisées dans l'élément rigide. Un autre moyen particulièrement avantageux est le surmoulage total ou partiel de l'élément rigide par l'élément en matière thermoplastique.

Selon un mode de réalisation préférentiel l'élément rigide est une pièce métallique. Elle peut par exemple être obtenue par emboutissage d'une plaque ou d'une feuille métallique. Les tôles d'acier, notamment non traitées ou galvanisées et/ou munies d'un primaire et éventuellement d'un agent d'adhérence, ainsi que les tôles d'aluminium non traitées ou anodisées et/ou munies d'un primaire et éventuellement d'un agent d'adhérence, sont particulièrement bien appropriées.

Selon un autre mode de réalisation, on peut utiliser comme élément rigide des feuilles de matière plastique mises en forme par pressage à chaud, qui sont composées de thermoplastes dans lesquels peuvent être insérées des nappes de fibres de verre ou de nappes de fibres synthétiques, tels que des stratifiés.

Pour la réalisation de pièces selon l'invention, on peut utiliser toute matière thermoplastique pouvant être mise en forme par moulage et plus particulièrement par des procédés d'injection-fluide. A titre d'exemple on peut citer les matières plastiques partiellement cristallines telles que la polyamide-6, la polyamide-6.6, le téréphtalate de polybutylène, le polyphtalamide, le sulfure de polyphénylène, les polyamides semi-aromatiques, ou le polypropylène.

On peut aussi utiliser toutes les compositions réalisées à partir de ces matières. On peut avantageusement utiliser des compositions renforcées, par exemple avec des charges choisies dans le groupe comprenant des fibres de verre, fibres minérales, par exemple la wollastonite, fibres céramiques, fibres organiques thermorésistantes comme les fibres en polyphtalamide, charges minérales telles que le kaolin, les silicates lamellaires éventuellement modifiés tels que la montmorillonite, les fluoromicas. Les compositions peuvent comprendre tous les additifs habituellement utilisés dans les compositions à base de polyamide utilisées pour la fabrication d'articles moulés. Ainsi, on peut citer à titre d'exemple d'additifs les stabilisants thermiques, les stabilisants U.V., les antioxydants, les lubrifiants, les pigments, colorants, plastifiants ou des agents modifiant la résilience. A titre d'exemple, les antioxydants et stabilisants chaleur sont, par exemple, des halogénures d'alcalins, des halogénures de cuivre, les composés phénoliques stériquement encombrés, les amines aromatiques. Les stabilisants U.V. sont généralement des benzotriazoles, des benzophénones ou des HALS.

On peut citer comme applications particulièrement bien appropriées pour de tels éléments de construction légers des éléments résistants pour portes de véhicules automobiles, supports de pare-chocs, faces avant et arrière pour véhicules automobiles, les bas de caisse. On exige généralement de ces articles une solidité et une rigidité renforcées.

La partie creuse de l'élément constitué de matière thermoplastique peut avantageusement être utilisée pour transférer des fluides, par exemple de l'air de l'eau de l'eau glycolée, des carburants, de l'huile. A cet effet la partie en matière thermoplastique de section creuse peut comprendre des moyens d'entrée et de sortie des fluides à l'intérieur de la partie creuse. Les pièces ainsi réalisées peuvent être utilisées dans un dispositif de transfert de fluides. Les articles selon l'invention peuvent aussi être utilisés pour la réalisation d'échangeurs de chaleur, par exemple pour la réalisation de radiateurs d'automobile, le fluide à refroidir circulant dans la partie creuse de l'élément en matière thermoplastique et l'échange étant réalisé avec le milieu extérieur. Si l'article comporte plusieurs partie creuses en matière thermoplastique, ces différentes parties peuvent être utilisée pour les transfert de fluides de natures différentes.

D'autres détails ou avantages de l'invention apparaîtront plus clairement au vu de l'exemple donné ci-dessous uniquement à titre indicatif, et illustré les figures 1 à 3 dans lesquelles:
La figure 1 représente une vue partielle en trois dimensions d'un article selon un premier mode de réalisation de l'invention.
La photo 1 représente un article selon le premier mode de réalisation.
La figure 2 représente une coupe en section transversale d'un article selon un deuxième mode de réalisation de l'invention.
La figure 3 représente une vue partielle en trois dimensions d'un article selon un troisième mode de réalisation de l'invention.

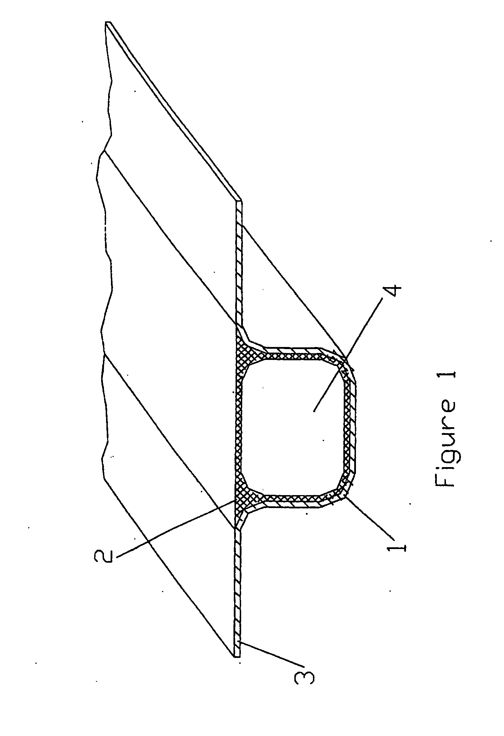

La figure 1 représente une vue partielle en trois dimensions d'un article selon un premier mode de réalisation de l'invention. L'article comprend un élément rigide 1 de forme allongée et rectiligne et une partie en matière thermoplastique 2. L'élément rigide est une tôle emboutie de section en forme de U, dont les extrémités présentent chacune un méplat 3. La zone comprise entre les branches du U définit un espace concave, dans lequel est placée la partie en matière thermoplastique. La forme de la partie en matière thermoplastique est conjuguée à celle de l'élément rigide. La partie en matière thermoplastique placée à l'intérieur de respace concave présente un creux 4. L'ensemble présente une excellente rigidité. Les moyens de solidarisation entre l'élément rigide et la partie en matière thermoplastique ne sont pas représentés sur cette figure. Ils apparaissent sur la photo 1.

La courbe 1 représente les courbes de flexion, réalisées dans les mêmes conditions, pour différentes structures: une structure selon le premier mode de réalisation, une structure selon le document EP 370342, une structure ne comportant que le profil métallique. L'abscisse représente le déplacement en mm, l'ordonnées représente la force en N.

L'article représenté en figure 1 peut par exemple être réalisé en plaçant l'élément rigide 1 dans un moule d'injection de forme choisie pour qu'un fluide puisse être injecté dans l'espace situé entre les paroi du moule et les parois internes de l'élément rigide définissant la forme de cuvette. Du polyamide 66 fondu est injecté à l'intérieur de cet espace, puis de l'azote gazeux est injecté à l'intérieur de la masse de polyamide fondu à l'aide de busettes situées dans le moule aux deux extrémités de remplacement ou est logé l'élément rigide. Après solidification du polyamide, l'article fabriqué est démoulé. La partie en matière thermoplastique matière thermoplastique 2 présente un creux 4.

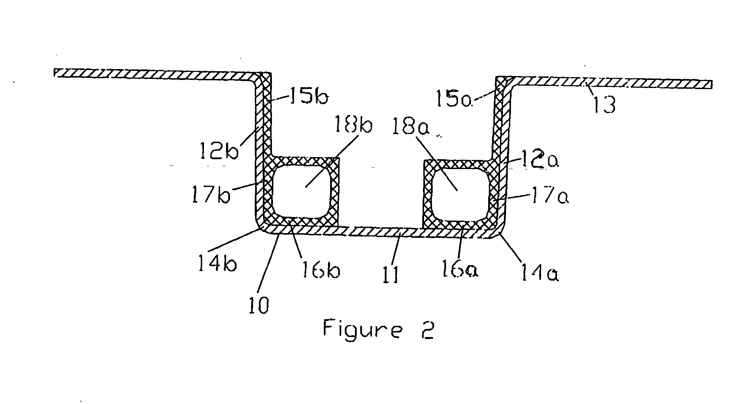

La figure 2 représente une coupe en section transversale d'un article selon un deuxième mode de réalisation. L'article comprend un élément rigide 10 en forme de U, avec une base 11, et deux parois opposées 12a; 12b formant les deux branches du U. Les extrémités du U présentent des méplats 13. La base et les parois forment des angles 14a; 14b. L'article comprend deux parties en matière thermoplastique 15a; 15b positionnées chacune, au moins en partie dans les angles 14a; 14b. Chacune des deux parties en matière thermoplastique prend appui sur la base 16a; 16b et sur la paroi relative à l'angle dans lequel elle est positionnée 17a; 17b. Chacune des parties positionnées dans les angle présente une portion tubulaire avec un creux 18a; 18b. Les moyens de solidarisation entre l'élément rigide et la partie en matière thermoplastique ne sont pas représentés sur cette figure.

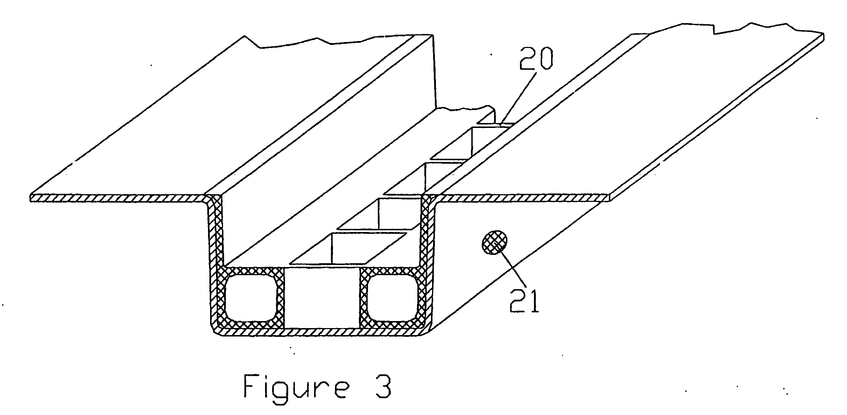

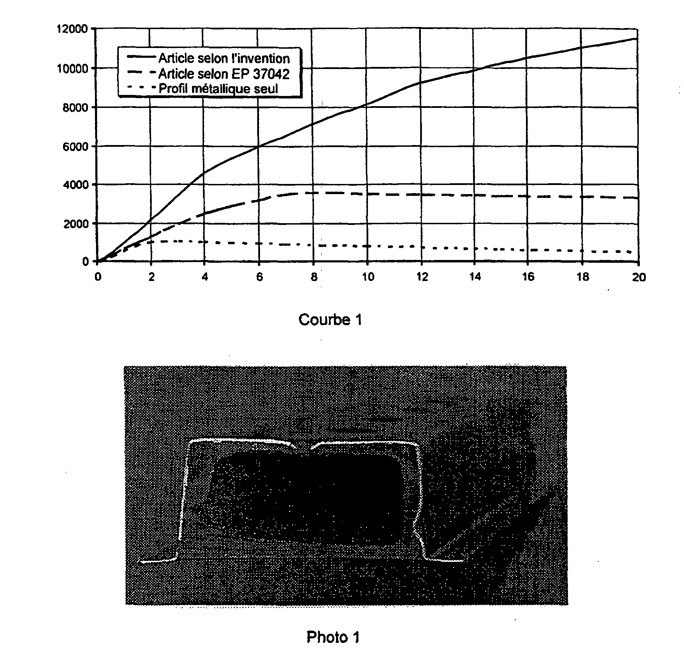

La figure 3 représente une vue partielle en trois dimensions d'un article selon un troisième mode de réalisation de l'invention. Le profile d l'article selon ce mode de réalisation est voisin de celui représenté en figure 2. L'article comporte en plus des nervures de renfort 20 entre les deux parties en matière thermoplastique positionnées dans les angles. L'élément rigide et les parties en matière thermoplastique sont solidarisés par débordement (21) de matière thermoplastique à travers un orifice percé dans l'élément rigide.

## Revendications

1. Article comprenant une partie constituée d'un élément rigide (1) de forme allongée dont au moins une partie présente une section transversale ayant un profil définissant un espace concave, et comportant au moins une partie en matière thermoplastique (2) associée à l'élément rigide et positionnée dans l'espace concave de l'élément rigide, **caractérisé en ce que** la partie en matière thermoplastique est en contact sur au moins deux lignes continues dans la direction longitudinale, et **en ce que** la partie en matière thermoplastique présente une section transversale comportant au moins un creux (4).

2. Article selon la revendication 1 **caractérisée en ce que** la partie en matière thermoplastique (2) positionnée dans l'espace concave de l'élément rigide (1) a un profil conjugué à l'espace concave.

3. Article selon la revendication 2 **caractérisé en ce que** la section transversale de l'élément rigide (1) est fermée.

4. Article selon la revendication 1 **caractérisé en ce que** le profil de l'élément rigide (10) est défini par au moins une base (11) et deux parois (12a, 12b) opposées définissant deux angles (14a, 14b) avec la base et **en ce qu'**il comporte au moins deux parties en matière thermoplastique (15a, 15b) de sections transversales creuses (18a, 18b), positionnées dans chaque angle, chacune de ces parties étant en appui sur au moins une portion de la base (16a, 16b) et au moins une portion de la paroi (17a, 17b) relative à l'angle dans lequel elle est positionnée.

5. Article selon la revendication 3 **caractérisé en ce que** le profil de l'élément rigide (10) est en forme de U ou de I.

6. Article selon l'une des revendications 4 ou 5 **caractérisé en ce que** qu'il comprend des nervures de renfort (20) en matière thermoplastique s'appuyant au moins en partie sur les parties en matières thermoplastiques positionnées dans les angles définis par les parois et la base.

7. Article selon l'une des revendications précédentes **caractérisé en ce qu'**il correspond à un assemblage d'un élément rigide (1) et d'au moins un élément moulé en matière thermoplastique (2).

8. Article selon la revendication 7 **caractérisé en ce que** cet assemblage correspond à un encastrement, soudure, collage, rivetage ou clipsage.

9. Article selon l'une des revendications 1 à 6 **caractérisé en ce que** la partie en matière thermoplastique (2) est moulé à l'intérieur de l'espace concave.

10. Article selon la revendication 9 **caractérisé en ce que** la partie en matière thermoplastique (2) et l'élément rigide (1) sont solidarisés par débordement de matière thermoplastique à travers des perforations réalisées sur l'élément rigide.

11. Article selon l'une des revendications 9 à 10 **caractérisé en ce que** la partie en matière thermoplastique (2) et l'élément rigide (1) sont solidarisés par surmoulage total ou partiel de l'élément rigide.

12. Article selon l'une des revendications précédentes **caractérisé en ce que** l'élément rigide (1) est une pièce métallique tubulaire ou profilée.

13. Article selon l'une des revendications précédentes **caractérisé en ce que** la matière thermoplastique est un polyamide.

14. Article selon l'unes des revendications précédentes **caractérisé en ce que** la partie en matière thermoplastique (2) de section creuse comprend des moyens d'entrée et de sortie d'un fluide à l'intérieur de la partie creuse.

15. Utilisation d'un article selon l'une des revendications 1 à 14 dans un dispositif de transfert de fluides.

16. Utilisation selon la revendication 15 **caractérisée en ce que** les fluides sont choisis parmi l'air, l'eau, l'eau glycolée, les carburants, les huiles.

17. Utilisation d'un article selon l'une des revendications 1 à 14 pour la réalisation de pièces de faces avant automobiles.

18. Utilisation d'un article selon l'une des revendications 1 à 14 dans un dispositif d'échange de chaleur.

19. Procédé de fabrication d'un article comportant au moins un élément rigide (1) dont une section transversale comporte au moins une partie définissant un espace concave, et comportant au moins un élément constitué de matière thermoplastique moulée (2), ce procédé comportant au moins les étapes suivantes :
a) Disposition dans un moule d'injection de forme choisie d'un élément rigide (1) préformé dont une section transversale comporte au moins une partie définissant un espace concave ;
b) Injection de matière thermoplastique fondue dans le moule ;
ce procédé est **caractérisé en ce qu'**il comporte l'étape suivante :
c) injection d'un fluide, de préférence un gaz, par une aiguille dans la matière thermoplastique fondue présente dans l'espace concave de l'élément rigide (1).

20. Procédé de fabrication d'un article comportant au moins un élément rigide (1) dont une section transversale comporte au moins une partie définissant un espace concave, et comportant au moins un élément constitué de matière thermoplastique moulée (2), ce procédé comportant au moins les étapes suivantes :
a) Disposition dans un moule d'injection de forme choisie d'un élément rigide (1) à préformer ;
b) Mise en préforme de l'élément rigide par emboutissage ou par thermodéformation dans le moule, la préforme présentant une section transversale qui comporte au moins une partie définissant un espace concave ;
c) Injection de matière thermoplastique fondue dans le moule;
ce procédé est **caractérisé en ce qu'**il comporte l'étape suivante :
d) Injection d'un fluide, de préférence un gaz, par une aiguille dans la matière thermoplastique fondue présente dans l'espace concave de l'élément rigide (1).

## Claims

1. Article comprising a part consisting of a rigid element (1) of elongate shape, at least one part of which has a cross section which has a profile defining a concave space, and comprising at least one part made of thermoplastic material (2) associated with the rigid element and positioned in the concave space of the rigid element, **characterized in that** the part made of thermoplastic material is in contact on at least two lines which are continuous in the longitudinal direction, and **in that** the part made of thermoplastic material has a cross section comprising at least one hollow (4).

2. Article according to Claim 1, **characterized in that** the part made of thermoplastic material (2) positioned in the concave space of the rigid element (1) has a profile which is the conjugate of the concave space.

3. Article according to Claim 2, **characterized in that** the cross section of the rigid element (1) is closed.

4. Article according to Claim 1, **characterized in that** the profile of the rigid element (10) is defined by at least one base (11) and two opposed walls (12a, 12b) defining two corners (14a, 14b) with the base and **in that** it comprises at least two parts made of thermoplastic material (15a, 15b) with hollow cross sections (18a, 18b) positioned in each corner, each of these parts resting along at least one portion of the base (16a, 16b) and at least one portion of the wall (17a, 17b) relative to the corner in which it is positioned.

5. Article according to Claim 3, **characterized in that** the profile of the rigid element (10) is in the shape of a U or an I.

6. Article according to one of Claims 4 or 5, **characterized in that** it comprises reinforcing ribs (20) made of thermoplastic material resting at least partly on the parts made of thermoplastic materials positioned in the corners defined by the walls and the base.

7. Article according to one of the preceding claims, **characterized in that** it corresponds to the assembly of a rigid element (1) and of at least one moulded element made of thermoplastic material (2).

8. Article according to Claim 7, **characterized in that** this assembly corresponds to insetting, welding, bonding, riveting or clipping.

9. Article according to one of Claims 1 to 6, **characterized in that** the part made of thermoplastic material (2) is moulded inside the concave space.

10. Article according to Claim 9, **characterized in that** the part made of thermoplastic material (2) and the rigid element (1) are secured by the protrusion of thermoplastic material through perforations made in the rigid element.

11. Article according to one of Claims 9 to 10, **characterized in that** the part made of thermoplastic material (2) and the rigid element (1) are secured by complete or partial overmoulding of the rigid element.

12. Article according to one of the preceding claims, **characterized in that** the rigid element (1) is a tubular or profiled metal component.

13. Article according to one of the preceding claims, **characterized in that** the thermoplastic material is a polyamide.

14. Article according to one of the preceding claims, **characterized in that** the part made of thermoplastic material (2) of hollow cross section comprises means for letting a fluid into and out of the interior of the hollow part.

15. Use of an article according to one of Claims 1 to 14 in a fluid-transfer device.

16. Use according to Claim 15, **characterized in that** the fluids are chosen from air, water, water containing glycol, fuels and oils.

17. Use of an article according to one of Claims 1 to 14 for producing motor vehicle front face components.

18. Use of an article according to one of Claims 1 to 14 in a heat-exchange device.

19. Method for fabricating an article comprising at least one rigid element (1) a cross section of which has at least one part defining a concave space and comprising at least one element made of a moulded thermoplastic material (2), this method comprising at least the following steps:
a) arranging, in an injection mould of chosen shape, a preformed rigid element (1) one cross section of which has at least one part defining a concave space,
b) injecting molten thermoplastic material into the mould,
this method being **characterized in that** it comprises the following step:
c) injecting a fluid, preferably a gas, through a needle into the molten thermoplastic material present in the concave space of the rigid element (1).

20. Method for fabricating an article comprising at least one rigid element (1) a cross section of which has at least one part defining a concave space and comprising at least one element made of a moulded thermoplastic material (2), this method comprising at least the following steps:
a) arranging, in an injection mould of chosen shape, a rigid element (1) that is to be preformed,
b) preforming the rigid element by pressing or by hot forming in the mould, the preform having a cross section which has at least one part defining a concave space,
c) injecting molten thermoplastic material into the mould,
this method being **characterized in that** it comprises the following step:
d) injecting a fluid, preferably a gas, through a needle into the molten thermoplastic material present in the concave space of the rigid element (1).

## Patentansprüche

1. Gegenstand, umfassend ein aus einem starren Element (1) mit länglicher Form gebildetes Teil, von dem mindestens ein Teil einen Querschnitt mit einem Profil aufweist, das einen konkaven Raum definiert, und umfassend mindestens ein Teil aus thermoplastischem Material (2), das mit dem starren Element assoziiert und in den konkaven Raum des starren Elementes positioniert ist, **dadurch gekennzeichnet, daß** das Teil aus thermoplastischem Material in Kontakt mit mindestens zwei Linien steht, die sich in der Längsrichtung fortsetzen, und dadurch, daß das Teil aus thermoplastischem Material einen Querschnitt aufweist, der mindestens einen Hohlraum (4) umfaßt.

2. Gegenstand nach Anspruch 1, **dadurch gekennzeichnet, daß** das Teil aus thermoplastischem Material (2), das in den konkaven Raum des starren Elementes (1) positioniert ist, ein mit dem konkaven Raum vereintes Profil aufweist.

3. Gegenstand nach Anspruch 2, **dadurch gekennzeichnet, daß** der Querschnitt des starren Elementes (1) geschlossen ist.

4. Gegenstand nach Anspruch 1, **dadurch gekennzeichnet, daß** das Profil des starren Elementes (10) durch mindestens eine Basis (11) und zwei gegenüberliegende Wandungen (12a, 12b) definiert ist, die ihrerseits zwei Winkel (14a, 14b) mit der Basis definieren, und dadurch, daß er mindestens zwei Teile aus thermoplasti-schem Material (15a, 15b) mit hohlem Querschnitt (18a, 18b), positioniert in jedem Winkel, umfaßt, wobei sich jedes dieser Teile an mindestens einem Abschnitt der Basis (16a, 16b) und an mindestens einem Abschnitt der Wandung (17a, 17b) relativ zum Winkel, in dem sie positioniert sind, abstützt.

5. Gegenstand nach Anspruch 3, **dadurch gekennzeichnet, daß** das Profil des starren Elementes (10) die Form eines U oder I besitzt.

6. Gegenstand nach einem der Ansprüche 4 oder 5, **dadurch gekennzeichnet, daß** er Verstärkungsrippen (29) aus thermoplastischem Material umfaßt, die sich mindestens teilweise an den Teilen aus thermoplastischem Material abstützen, die in den durch die Wandungen und die Basis definierten Winkeln positioniert sind.

7. Gegenstand nach einem der vorstehenden Ansprüche, **dadurch gekennzeichnet, daß** er einem Zusammensetzen von mindestens einem starren Element (1) und mindestens einem aus einem thermoplastischen Material (2) gegossenen Element entspricht.

8. Gegenstand nach Anspruch 7, **dadurch gekennzeichnet, daß** dieses Zusammensetzen einem Einspannen, Verschweißen, Verkleben, Vernieten oder Verklemmen entspricht.

9. Gegenstand nach einem der Ansprüche 1 bis 6, **dadurch gekennzeichnet, daß** das Teil aus thermoplastischem Material (2) im Inneren des konkaven Raumes gegossen wird.

10. Gegenstand nach Anspruch 9, **dadurch gekennzeichnet, daß** das Teil aus thermoplastischem Material (2) und das starre Element (1) durch das Einfließen von thermoplastischem Material durch in dem starren Element realisierte Perforationen fest verbunden werden.

11. Gegenstand nach einem der Ansprüche 9 bis 10, **dadurch gekennzeichnet, daß** das Teil aus thermoplastischem Material (2) und das starre Element (1) durch vollständiges oder teilweises Umspritzen des starren Elementes fest verbunden werden.

12. Gegenstand nach einem der vorstehenden Ansprüche, **dadurch gekennzeichnet, daß** das starre Element (1) ein rohrförmiges oder profiliertes Metallteil ist.

13. Gegenstand nach einem der vorstehenden Ansprüche, **dadurch gekennzeichnet, daß** das thermoplastische Material ein Polyamid ist.

14. Gegenstand nach einem der vorstehenden Ansprüche, **dadurch gekennzeichnet, daß** das Teil aus thermoplastischem Material (2) mit hohlem Querschnitt Mittel für den Eintritt und für den Austritt eines Fluids zum oder vom Inneren des hohlen Teils umfaßt.

15. Verwendung eines Gegenstandes nach einem der Ansprüche 1 bis 14 in einer Transfervorrichtung für Fluide.

16. Verwendung nach Anspruch 15, **dadurch gekennzeichnet, daß** die Fluide unter Luft, Wasser, glykolhaltigem Wasser, Kraftstoffen und Ölen ausgewählt werden.

17. Verwendung eines Gegenstandes nach einem der Ansprüche 1 bis 14 zur Herstellung von Teilen für die Vorderseite von Kraftfahrzeugen.

18. Verwendung eines Gegenstandes nach einem der Ansprüche 1 bis 14 in einer Vorrichtung zum Wärmeaustausch.

19. Verfahren zur Herstellung eines Gegenstandes, umfassend mindestens ein starres Element (1), von dem ein Querschnitt mindestens einen Teil umfaßt, der einen konkaven Raum definiert, und umfassend mindestens ein Element, das aus gegossenem, thermoplastischen Material (2) besteht, wobei dieses Verfahren mindestens die folgenden Stufen umfaßt:
a) Anordnen in einer Spritzgußform von der ausgewählten Form eines vorgeformten starren Elementes (1), von dem ein Querschnitt mindestens einen Teil umfaßt, der einen konkaven Raum definiert;
b) Einspritzen von geschmolzenem thermoplastischen Material in die Spritzgußform;
wobei dieses Verfahren **dadurch gekennzeichnet ist, daß** es die folgende Stufe umfaßt:
c) Einspritzen eines Fluids, vorzugsweise eines Gases, durch eine Nadel in das geschmolzene thermoplastische Material, das in dem konkaven Raum des starren Elementes (1) anwesend ist.

20. Verfahren zur Herstellung eines Gegenstandes, umfassend mindestens ein starres Element (1), von dem ein Querschnitt mindestens einen Teil umfaßt, der einen konkaven Raum definiert, und umfassend mindestens ein Element, das aus gegossenem, thermoplastischen Material (2) besteht, wobei dieses Verfahren mindestens die folgenden Stufen umfaßt:
a) Anordnen in einer Spritzgußform von der ausgewählten Form eines vorzuformenden starren Elementes (1),
b) Ausformen des starren Elementes durch Eindrücken oder durch Thermoverformung in die Spritzgußform, wobei die Vorform einen Querschnitt aufweist, der mindestens einen Teil umfaßt, der einen konkaven Raum definiert;
c) Einspritzen von geschmolzenem thermoplastischen Material in die Spritzgußform;
wobei dieses Verfahren **dadurch gekennzeichnet ist, daß** es die folgende Stufe umfaßt:
d) Einspritzen eines Fluids, vorzugsweise eines Gases, durch eine Nadel in das geschmolzene thermoplastische Material, das in dem konkaven Raum des starren Elementes (1) anwesend ist.
